# EUROPÄISCHE PATENTSCHRIFT

(11) **EP 2 558 669 B1**
(45) Veröffentlichungstag und Bekanntmachung des Hinweises auf die Patenterteilung: **09.10.2019**
(21) Anmeldenummer: 11713257.1
(22) Anmeldetag: 06.04.2011
(51) Int. Cl.: E05F 15/695, E05F 15/40

(54) **VERFAHREN ZUM BETREIBEN EINER SCHLIESSVORRICHTUNG SOWIE EINE SCHLIESSVORRICHTUNG**
METHOD FOR OPERATING A CLOSING DEVICE, AND A CLOSING DEVICE
PROCÉDÉ PERMETTANT DE FAIRE FONCTIONNER UN DISPOSITIF DE FERMETURE ET DISPOSITIF DE FERMETURE

(30) Priorität: 14.04.2010 DE 102010027746
(43) Veröffentlichungstag der Anmeldung: 20.02.2013
(73) Patentinhaber: Robert Bosch GmbH, 70442 Stuttgart (DE)
(72) Erfinder: KOERWER, Matthias, 77830 Buehlertal (DE); HUCK, Thomas, 77836 Rheinmuenster (DE); KUSSEROW, Peter, 77815 Buehl (DE)
(86) Internationale Anmeldenummer: PCT/EP2011/055355
(87) Internationale Veröffentlichungsnummer: WO 2011/128238

(56) Entgegenhaltungen:
- WO-A1-2008/022884
- DE-A1-102005 037 471

## Beschreibung

### Technisches Gebiet

Die vorliegende Erfindung betrifft automatische Schließvorrichtungen, wie beispielsweise automatische Fensterheber und Dachschließanlagen in einem Kraftfahrzeug, die mit einer Einklemmschutzfunktion ausgestattet sind und bei denen die Steuerung einen Schlafmodus einnehmen kann.

### Stand der Technik

Automatische Schließvorrichtungen weisen in der Regel ein Schließelement (Fensterscheibe, Schiebedach) auf, das elektrisch durch einen Elektromotor angetrieben wird. Der Elektromotor wird von einer Steuereinheit angesteuert, die mit einem Bedienelement gekoppelt ist, um abhängig von einer Betätigung des Bedienelements den Elektromotor anzusteuern und dessen Bewegungsrichtung vorzugeben.

Bei Schließvorrichtungen an einem Kraftfahrzeug, wie beispielsweise elektrischen Fensterhebern, elektrischen Schiebedächern und dergleichen, muss sichergestellt werden, dass sich während eines Schließvorgangs, bei dem das Schließelement in Richtung einer Anschlagskante (Fensterrahmen, Dachausnehmung) bewegt wird, keine Gegenstände oder Körperteile befinden, die beschädigt bzw. verletzt werden können. Um einen solchen Fall zu vermeiden, ist in einer Steuereinheit ein Algorithmus implementiert, der einen Einklemmfall während eines Schließvorgangs des Schließelements erkennt. Wird der Einklemmfall erkannt, wird der Schließvorgang unterbrochen bzw. eine Reversierung durchgeführt, bei der das Schließelement zumindest kurzzeitig eine Öffnungsbewegung vollzieht.

DE 10 2005 037 471 A1 offenbart eine solche Schließvorrichtung mit einem Einklemmschutz.

Die Schließvorrichtung wird in der Regel mit Hilfe des Bedienelements aktiviert, und es kann abhängig von der Art der Bedienung des Bedienelements ein Automatiklauf aktiviert werden, bei dem sich das Schließelement automatisch in Öffnungsrichtung bzw. in Schließrichtung bewegt, ohne dass das Bedienelement betätigt bleiben muss. In einem Automatiklauf-Modus kann der Automatiklauf beispielsweise bei Betätigen des Bedienelements für eine bestimmte Zeitdauer aktiviert werden.

In der Regel ist zur Reduzierung des Ruhestroms in der Steuereinheit ein so genannter Schlafmodus realisiert, bei dem die Steuereinheit im Wesentlichen funktionslos ist, solange der Elektromotor ausgeschaltet ist, keine Bewegung des Schließelements in Öffnungs- oder Schließrichtung durchgeführt wird und keine weitere Betätigung des Bedienelements erfolgt. Dies dient dazu, die Ruhestromaufnahme möglichst zu reduzieren, bis die Steuereinheit durch ein Aufwecksignal in einen Normalbetriebsmodus versetzt wird.

WO 2008/022884 A1 offenbart eine Schließvorrichtung für ein Kraftfahrzeug, bei dem zur Reduzierung des Ruhestroms in der Steuereinheit ein Schlafmodus realisiert ist.

Weiterhin ist insbesondere bei automatischen Fensterhebern eine Funktion realisiert, bei der kurz vor dem Erreichen einer vollständigen Schließstellung, bei der das Schließelement an der Anschlagkante anliegt, die Einklemmschutzfunktion deaktiviert wird. In der Regel ist die Anschlagskante, gegen die das Schließelement verfahren wird, mit einer Dichtung versehen, so dass sich der Widerstand bei einem Schließvorgang kurz vor dem Auftreffen des Schließelements an der Anschlagskante erhöht. Durch das Deaktivieren der Einklemmschutzfunktion in diesem Bereich wird sichergestellt, dass beim Einfahren des Schließelements in die Dichtung nicht fälschlicherweise ein Einklemmfall detektiert wird.

Während bei früheren Systemen selbstsperrende Getriebe zum Bewegen des Schließelements verwendet wurden, werden zusehends zur Verbesserung des Wirkungsgrads nicht selbstsperrende Getriebe verwendet. Um das Schließelement gegen eine manuelle Bewegung des Schließelements zu blockieren, werden in der Regel geeignete Maßnahmen vorgesehen, die eine manuelle Verdrehung des Elektromotors verhindern. Trotz derartiger Maßnahmen zur Realisierung einer manuellen Bewegung des Schließelements kann es vorkommen, dass der Elektromotor und das Schließelement um einen kurzen Weg bewegt werden können, bevor die Blockierung einsetzt.

Wenn sich bei einer solchen von extern ausgelösten Bewegung des Schließelements die Steuereinheit im Schlafmodus befindet, während dem eine Positionserkennung für das Schließelement inaktiv ist, kann es somit zu einer Fehljustierung zwischen einer in der Steuereinheit gespeicherten Stellungsangabe für die zuletzt detektierte Position des Schließelements und der aktuellen Position des Schließelements kommen. Insbesondere bei einer Schließbewegung des Schließelements, vor der in einer vorangegangenen Phase eines Schlafmodus eine von extern ausgelöste Bewegung des Schließelements stattgefunden hat, kann es bei einer solchen Fehljustierung dazu kommen, dass die Einklemmschutzfunktion zu früh vor Erreichen der Anschlagskante deaktiviert wird und damit in diesem Bereich kein wirksamer Einklemmschutz aktiv ist. Mit anderen Worten wird in einem solchen Fall der Einklemmschutz deaktiviert, obwohl das Schließsystem einen Zwischenraum zwischen dem Schließelement und der Anschlagkante aufweist, der ausreichend breit ist, dass Gegenstände oder Körperteile hineingeraten können und diese beschädigt bzw. verletzt werden können.

Es ist Aufgabe der vorliegenden Erfindung, ein Verfahren und eine Schließvorrichtung zur Verfügung zu stellen, bei denen ein Einklemmrisiko bei einer Fehljustierung der Stellungsangabe des Schließelements zu einer tatsächlichen Position des Schließelements reduziert ist.

### Offenbarung der Erfindung

Diese Aufgabe wird durch das Verfahren zum Betreiben eines Schließsystems gemäß Anspruch 1 sowie durch die Schließvorrichtung und das Schließsystem gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zum Betreiben einer Schließvorrichtung vorgesehen, wobei ein Schließelement mit Hilfe eines durch eine Steuereinheit gesteuerten Antriebsmotor gegen eine Anschlagskante in einer Schließrichtung verfahrbar ist, wobei die Steuereinheit in einen Normalbetriebsmodus, in dem eine Stellungsangabe als aktuelle Position des Schließelements erfasst wird, und in einen Schlafmodus, in dem keine Erfassung der Stellungsangabe durchgeführt wird, versetzbar ist. Das Verfahren umfasst die folgenden Schritte:
- Abfragen, ob eine Aufwachbedingung vorliegt, bei der die Steuereinheit von dem Schlafmodus in den Normalbetriebsmodus übergeht;
- wenn das Vorliegen der Aufwachbedingung festgestellt wird und wenn sich das Schließelement vor dem Einnehmen des Schlafmodus zuletzt in der Schließrichtung bewegt hat, Beaufschlagen der Stellungsangabe mit einem vorgegebenen Korrekturwert, um die Stellungsangabe bezüglich einer tatsächlichen Position des Schließelements in eine Öffnungsrichtung zu korrigieren.

Eine Idee des obigen Verfahrens besteht darin, dass nach Einnehmen eines Schlafmodus nach einer Bewegung des Schließelements in Schließrichtung eine Stellungsangabe für eine Stellung des Schließelements mit einem Korrekturwert beaufschlagt wird, um eine etwaige nicht detektierte Verstellung des Schließelements während des Schlafmodus in Öffnungsrichtung zumindest teilweise zu kompensieren. Die Beaufschlagung mit dem Korrekturwert führt dazu, dass die Stellungsangabe in einer Öffnungsrichtung angepasst wird, so dass im Vergleich zu einer nicht korrigierten Stellungsangabe die Deaktivierung der Einklemmschutzfunktion bei einer Schließbewegung kurz vor dem Hineinlaufen einer Kante des Schließelements in eine Dichtung an der Anschlagkante später erfolgt. Auf diese Weise kann vermieden werden, dass durch eine Verstelllung der Justierung zwischen der Stellungsangabe und der tatsächlichen Position der Bereich zwischen dem Schließelement und der Anschlagkante vergrößert ist und dadurch das Deaktivieren der Einklemmschutzfunktion zu früh erfolgen kann.

Die Stellungsangabe wird nur dann mit einem vorgegebenen Korrekturwert korrigiert, wenn sich das Schließelements vor dem Einnehmen des Schlafmodus in der Schließrichtung bewegt hat.

Gemäß einer Ausführungsform kann die Stellungsangabe nur dann mit dem vorgegebenen Korrekturwert korrigiert werden, wenn nach einem Kalibrieren, bei dem die Stellungsangabe auf die tatsächliche Position des Schließelements kalibriert wird, eine Anzahl von Aufwachvorgängen aus dem Schlafmodus erfolgt ist, die einen vorgegebenen Schwellenwert übersteigt.

Ferner kann das Kalibrieren durchgeführt werden, wenn festgestellt wird, dass bei einer Schließbewegung das Schließelement gegen die Anschlagskante verfahren wird.

Wenn das Vorliegen der Aufwachbedingung festgestellt wird und wenn sich das Schließelement vor dem Einnehmen des Schlafmodus zuletzt in der Öffnungsrichtung bewegt hat, wird kein Beaufschlagen mit einem Korrekturwert durchgeführt. Es kann vorgesehen sein, dass die Aufwachbedingung ein Betätigen eines Bedienelements zum Schließen und/oder Öffnen umfasst.

Gemäß einer weiteren Ausführungsform kann eine Einklemmschutzfunktion, die eine automatische Abschaltung des Antriebsmotors bewirkt, wenn ein Einklemmfall detektiert wird, deaktiviert werden, wenn die Stellungsangabe angibt, dass der Abstand zwischen einer der Anschlagskante gegenüberliegende Kante des Schließelements und der Anschlagskante weniger als einem vorgegebenen Abstand entspricht.

Gemäß einem weiteren Aspekt ist eine Schließvorrichtung, insbesondere ein automatisches Fensterhebersystem, mit einem Schließelement, das mit Hilfe eines durch eine Steuereinheit gesteuerten Antriebsmotors gegen eine Anschlagskante in einer Schließrichtung verfahrbar ist, zur Ausführung des erfindungsgemäßen Verfahrens vorgesehen.

Gemäß einem weiteren Aspekt ist ein Computerprogrammprodukt vorgesehen, das einen Programmcode enthält, der, wenn er auf einer Datenverarbeitungsvorrichtung ausgeführt wird, das obige Verfahren ausführt.

### Kurzbeschreibung der Zeichnungen

Bevorzugte Ausführungsformen werden nachfolgend anhand der beigefügten Zeichnungen näher erläutert. Es zeigen:
- Figur 1: eine schematische Darstellung eines automatischen Fensterhebers in einem Kraftfahrzeug;
- Figur 2: ein Flussdiagramm zur Darstellung des Verfahrensablaufs zum Betreiben des automatischen Fensterhebers.

### Beschreibung von Ausführungsformen

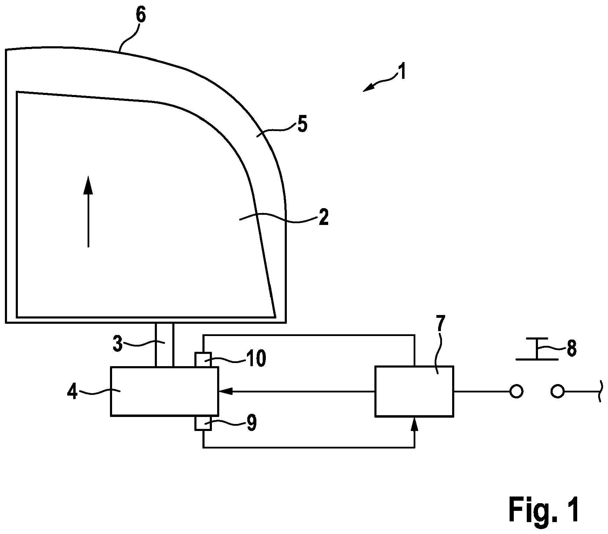

In Figur 1 ist ein automatisches Fensterhebersystem 1 für ein Seitenfenster eines Kraftfahrzeugs dargestellt, bei dem eine Fensterscheibe 2 als Schließelement mit Hilfe eines Schließmechanismus 3 in einem Fensterrahmen 5 beweglich verfahrbar ist. Die Fensterscheibe 2 wird über den Schließmechanismus 3, der ein geeignetes Getriebe umfassen kann, durch einen Elektromotor 4 angetrieben. In dem vorliegenden Ausführungsbeispiel wird die Fensterscheibe 2 nach oben (in Pfeilrichtung) verfahren, um das Fenster zu schließen, wobei die Fensterscheibe 2 an einer Anschlagskante 6 des Fensterrahmens 5 eine Schließposition erreicht.

Der Elektromotor 4 wird von einer Steuereinheit 7 abhängig von einer Betätigung eines Bedienelements 8 angesteuert, so dass sich die Fensterscheibe 2 in einer vorgegebenen Richtung bewegt. Zum Beispiel kann die Fensterscheibe 2 bei Betätigen des Bedienelements 8 zum Schließen des Fensters durch eine Rotation des Elektromotors 4 nach oben, d.h. in eine Schließrichtung, bewegt werden, so dass die Fensterscheibe 2 eine Schließbewegung ausführt. Analog kann die Fensterscheibe 2 bei Betätigen des Bedienelements 8 zum Öffnen des Fensters durch eine entgegengesetzte Rotation des Elektromotors 4 nach unten, d.h. in eine Öffnungsrichtung, bewegt werden, so dass die Fensterscheibe 2 eine Öffnungsbewegung ausführt.

Weiterhin ist es möglich, durch eine Betätigung des Bedienelements 8 auf eine bestimmte Weise einen Automatiklaufmodus zu aktivieren, bei dem selbst nach Loslassen der Betätigung des Bedienelements 8 die zuvor vorgegebene Bewegung der Fensterscheibe 2 fortgesetzt wird, bis entweder das Bedienelement 8 erneut betätigt wird oder bis die Fensterscheibe 2 eine Anschlagposition in einer vollständigen Offenstellung oder einer vollständigen Schließstellung erreicht hat.

Weiterhin kann der Elektromotor 4 bzw. der Schließmechanismus 3 mit einem Positionsgeber 9 versehen sein, der eine relative Positionsänderung einer Bewegung der Fensterscheibe 2 detektieren kann. Insbesondere kann der Positionsgeber 9 bei einer Drehung des Elektromotors 4 entsprechend der Drehbewegung Impulse abgeben, die für ein Inkrementieren bzw. Dekrementieren eines Positionszählers, der in der Steuereinheit 7 implementiert ist, verwendet werden können. Der jeweilige Zählerwert des Positionszählers stellt dann eine Stellungsangabe für eine Position der Fensterscheibe 2 dar. Alternativ kann anstelle des Positionsgebers 9 an dem Elektromotor 4 oder an dem Schließmechanismus 3 auch ein Stromverlauf eines Motorstroms des Elektromotors 4 ausgewertet werden, um eine relative Positionsänderung des Elektromotors 4 und damit eine relative Positionsänderung der Stellung der Fensterscheibe 2 zu detektieren und durch Kumulierung der Positionsänderungen eine Stellungsangabe bereitzustellen.

In der Steuereinheit 7 ist eine Einklemmschutzfunktion realisiert, die anhand von Motorkenngrößen einen Einklemmfall detektiert. Ein Einklemmfall liegt vor, wenn ein Gegenstand oder ein Körperteil zwischen eine der Anschlagskante gegenüberliegende Fensterkante der Fensterscheibe 2 und den Fensterrahmen 5 gerät und durch eine Schließbewegung der Fensterscheibe 2 eine Kraft auf den Gegenstand oder das Körperteil ausgeübt wird. Dazu können an dem Elektromotor 4 ein oder mehrere Sensoren 10 angebracht sein, so dass der Verlauf des Motorstroms und/oder der Verlauf der Motordrehzahl erfasst werden können. Anhand des Verlaufs des Motorstroms bzw. der Motordrehzahl kann eine Erhöhung des zum Bewegen der Fensterscheibe 2 benötigten Antriebsmoments festgestellt werden, was als Einklemmfall interpretiert werden kann.

Weiterhin kann zur Reduzierung der Ruhestromaufnahme die Steuereinheit 7 in einen so genannten Schlafmodus versetzt werden, der immer dann eingenommen werden kann, wenn die Fensterscheibe 2 nicht bewegt wird (d.h. der Elektromotor 4 nicht durch die Steuereinheit 7 angesteuert werden muss) und das Bedienelement 8 nicht betätigt wird. In dem Schlafmodus ist die Steuereinheit 7 nahezu funktionslos, so dass keine Aktualisierung des Positionszählers erfolgt und damit keine aktuelle Stellungsangabe für eine Position der Fensterscheibe 2 zur Verfügung steht. Bei Betätigen des Bedienelements 8 und/oder bei Vorliegen einer weiteren Aufwachbedingung, z.B. eingeschalteter Zündung und dergleichen, wird die Steuereinheit 7 so angesteuert, dass sie den Schlafmodus verlässt und in eine Normalbetriebsart übergeht und den Elektromotor 4 entsprechend zum Schließen oder Öffnen des Fensters ansteuert.

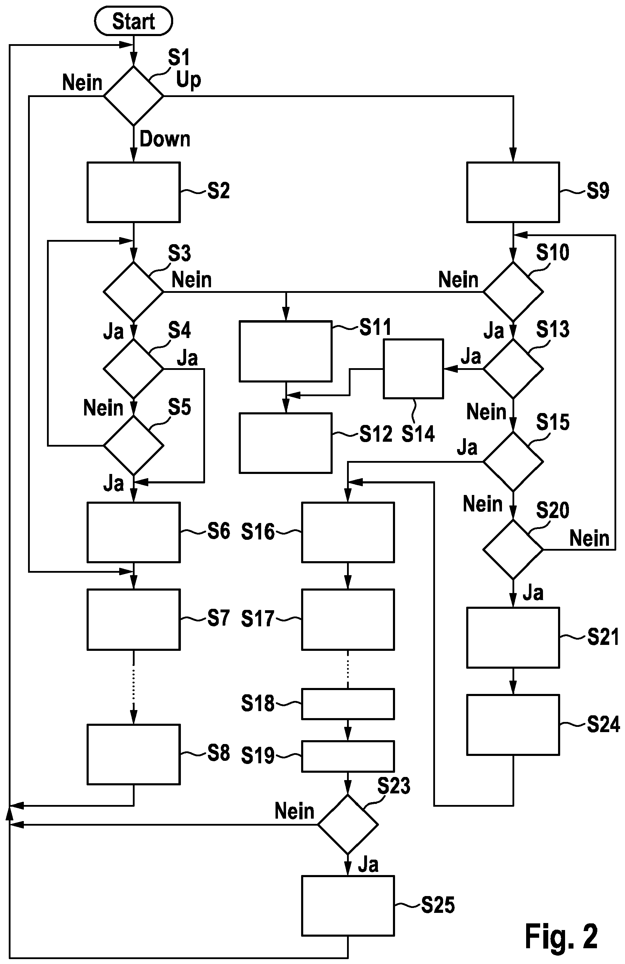

In Figur 2 ist ein Flussdiagramm zur Veranschaulichung eines Verfahrens zum Betreiben eines automatischen Fensterhebersystems dargestellt.

In einem Schritt S1 wird überprüft, ob das Bedienelement 8 für einen Automatiklauf betätigt worden ist oder nicht. Ist in Schritt S1 das Bedienelement 8 betätigt worden, um die Fensterscheibe 2 in einem Automatiklauf (d.h. auch bei Loslassen der Betätigung des Bedienelements 8) nach unten, d.h. in eine Offenstellung, zu bewegen (Alternative: Down), so wird in Schritt S2 eine Bewegung der Fensterscheibe 2 nach unten gestartet, indem die Steuereinheit 7 den Elektromotor 4 entsprechend ansteuert. Die Bewegung der Fensterscheibe 2 wird in Schritt S3 auf Plausibilität überprüft, d.h. es wird überprüft, ob die Stellungsangabe, die die Position der Fensterscheibe 2 angibt, innerhalb eines Plausibilitätsbereichs liegt oder nicht. Liegt die Stellungsangabe innerhalb des Plausibilitätsbereichs (Alternative: Ja), so wird in einem Schritt S4 überprüft, ob das Bedienelement 8 zum Abschalten der Bewegung der Fensterscheibe 2 betätigt worden ist. Ist das Bedienelement 8 nicht betätigt worden (Alternative: nein), so wird in Schritt S5 überprüft, ob ein Anschlag an der Öffnungsposition erreicht worden ist. Dies kann beispielsweise durch Überwachen eines Motorstroms oder durch geeignete Sensoren an dem Fensterrahmen 5 festgestellt werden. Wird in Schritt S5 festgestellt, dass der Anschlag an der Öffnungsposition noch nicht erreicht ist (Alternative: Nein), so wird zu Schritt S3 zurückgesprungen.

Wird in Schritt S4 festgestellt, dass das Bedienelement 8 betätigt worden ist (Alternative: Ja), oder wird in Schritt S5 festgestellt, dass der Anschlag an der Öffnungsposition (bei maximal geöffneter Fensterscheibe 2) erreicht worden ist (Alternative: Ja), so wird in einem nachfolgenden Schritt S6 der Elektromotor 4 durch die Steuereinheit 7 abgeschaltet.

In einem nachfolgenden Schritt S7 wird die Steuereinheit 7 in einen Schlafmodus versetzt. Ein Aufwachen aus dem Schlafmodus gemäß einem Schritt S8 kann z. B. vorgesehen sein, wenn das Bedienelement 8 erneut betätigt wird oder ein sonstiges Systemereignis aufgetreten ist, das einer Aufwachbedingung entspricht. In diesem Fall wird der Schlafmodus des Schritts S7 verlassen und zu Schritt S1 zurückgesprungen.

Wird in Schritt S1 festgestellt, dass das Bedienelement 8 zum Bewegen der Fensterscheibe 2 in einem Automatiklauf in eine Schließrichtung betätigt worden ist (Alternative: Up), so wird analog zu Schritt S2 in einem Schritt S9 eine Bewegung der Fensterscheibe 2 nach oben (in Schließrichtung) gestartet, indem die Steuereinheit 7 den Elektromotor 4 entsprechend ansteuert. In einem nachfolgenden Schritt S10 wird entsprechend dem Schritt S3 überprüft, ob die Stellungsangabe, die die Position der Fensterscheibe 2 angibt, plausibel ist.

Wird in Schritt S10 oder in Schritt S3 festgestellt (Alternativen: Nein), dass die angegebene Stellungsangabe nicht plausibel ist, so wird in Schritt S11 der Elektromotor 4 durch die Steuereinheit 7 unmittelbar gestoppt. In einem nachfolgenden Schritt S12 wird der Automatiklaufmodus abgeschaltet, der eine automatische Bewegung der Fensterscheibe 2 auch nach Loslassen des Bedienelements 8 ermöglicht. Nach Abschalten des Automatiklaufmodus kann die Fensterscheibe 2 nur noch in einem halbautomatischen Betrieb bewegt werden, indem mit Hilfe des Bedienelements 8 der Elektromotor unmittelbar ein- bzw. ausgeschaltet werden kann.

Wird in Schritt S10 festgestellt, dass die Stellungsangabe plausibel ist (Alternative: Ja), so wird eine Motorkenngröße, wie z. B. eine Drehzahl oder ein Motorstrom und dergleichen, dahingehend überprüft, ob ein Einklemmfall vorliegt. Ein Einklemmfall kann beispielsweise durch eine unerwartete Abnahme der Drehzahl oder einen unerwarteten Anstieg des Motorstroms erkannt werden. Verfahren zur Auswertung von Drehzahl- und Motorstromverläufen zur Erkennung eines Einklemmfalls bzw. zum Unterscheiden eines Einklemmfalls von einer Schwergängigkeit sind aus dem Stand der Technik hinreichend bekannt und werden hierin nicht weiter erläutert.

Wurde ein Einklemmfall erkannt (Alternative: Ja), so wird in Schritt S14 der Elektromotor 4 für eine vorgegebene Zeitdauer reversiert und die Fensterscheibe 2 dadurch in Öffnungsrichtung verfahren, um einen möglicherweise eingeklemmten Gegenstand oder ein möglicherweise eingeklemmtes Körperteil aus einem eingeklemmten Zustand zu befreien. Weiterhin wird nachfolgend gemäß Schritt S12 der Automatiklaufmodus deaktiviert.

Wird in Schritt S13 kein Einklemmfall festgestellt (Alternative: Nein), so wird in einem Schritt S15 überprüft, ob das Bedienelement 8 zum Stoppen der Bewegung der Fensterscheibe 2 betätigt worden ist. Ist dies der Fall (Alternative: Ja), so wird der Elektromotor 4 in einem Schritt S16 durch die Steuereinheit 7 gestoppt, so dass die Fensterscheibe 2 an der momentanen Position angehalten wird. Anschließend wird in Schritt S17 die Steuereinheit 7 in einen Schlafmodus versetzt.

Aus dem Schlafmodus wird, wie zuvor beschrieben, die Steuereinheit 7 erst dann in einen Normalbetriebsmodus zurückversetzt, wenn das Bedienelement 8 erneut betätigt worden ist oder wenn ein sonstiges Systemereignis, das eine Aufwachbedingung erfüllt, aufgetreten ist.

Wenn in Schritt S15 keine Betätigung des Bedienelements 8 festgestellt worden ist (Alternative: Nein), so wird in Schritt S20 überprüft, ob ein Anschlag in Schließstellung erreicht worden ist. Dies kann beispielsweise dann erfolgt sein, wenn eine obere Kante der Fensterscheibe 2 auf die Anschlagskante des Fensterrahmens 5 auftrifft. Alternativ kann die Schließstellung auch detektiert werden, wenn die Kante der Fensterscheibe 2 in eine Dichtung an dem Fensterrahmen 5 einfährt, noch bevor die Kante der Fensterscheibe 2 auf den Fensterrahmen 5 auftrifft. Wird ein Erreichen des Anschlags der Schließposition detektiert (Alternative: Ja), so wird die Stellungsangabe über die Position der Fensterscheibe 2 in Schritt S21 kalibriert und in dem nachfolgenden Schritt S16 der Elektromotor 4 gestoppt. Wird kein Erreichen des Anschlags der Schließposition detektiert (Alternative. Nein), so wird zu Schritt S10 zurückgesprungen.

Erfindungsgemäß ist es nun vorgesehen, dass nach dem Aufwachen der Steuereinheit 7 in einem Schritt S18 aus dem Schlafmodus, der in Schritt S17 eingenommen worden ist, die Stellungsangabe, die die Position der Fensterscheibe 2 angibt, mit einem Korrekturwert beaufschlagt (z.B. durch Addition) wird (Schritt S25), so dass die Stellungsangabe dahingehend korrigiert wird, dass sie nach der Korrektur eine größere Offenstellung der Fensterscheibe 2 angibt als ohne Korrektur, d.h. die korrigierte Stellungsangabe gibt eine größere Breite eines Zwischenraums zwischen dem Fensterrahmen und der dem Fensterrahmen gegenüberliegende obere Kante der Fensterscheibe 2 bzw. den größeren Abstand zwischen Anschlagskante des Fensterrahmens und der Fensterscheibe 2 an.

Der Korrekturwert kann vorgegeben bzw. adaptiert werden. Um nicht nach einem gerade erfolgten Kalibriervorgang in Schritt S21 unmittelbar eine Korrektur mit dem Korrekturwert durchzuführen und somit den Effekt der Kalibrierung sofort zu verfälschen, wird ein Aufwachzähler implementiert, der bei jedem Aufweckvorgang des Schritts S18 in einem Schritt S19 inkrementiert wird. In dem Schritt S23 wird abgefragt, ob der Aufwachzähler einen bestimmten vorgegebenen Schwellenwert überschritten hat. Ist dies nicht der Fall (Alternative: Nein), so wird zu Schritt S1 zurückgesprungen, um festzustellen, ob das Bedienelement 8 zum Bewegen der Fensterscheibe 2 in eine Schließ- oder eine Öffnungsrichtung betätigt worden ist. Der Aufwachzähler wird in einem Schritt S24, der zwischen dem Schritt S21 des Kalibrierens und dem Schritt S16 des Stoppens des Elektromotors angeordnet ist, zurückgesetzt.

Ist in Schritt S23 der vorgegebene Schwellenwert erreicht worden (Alternative: Ja), so wird in Schritt S25 die Stellungsangabe mit dem Korrekturwert beaufschlagt und anschließend zu Schritt S1 zurückgesprungen. Bei Verwendung des Aufwachzählers ist nach dem Schritt S22 ein weiterer Schritt S24 vorgesehen, um den Aufwachzähler zurückzusetzen, um so die Funktion zu realisieren, dass die Beaufschlagung mit dem Korrekturwert nicht unmittelbar nach einem Kalibrieren der Stellungsangabe erfolgt. Das Festlegen des Korrekturwerts und des vorgegebenen Schwellenwerts für den Aufwachzähler ist nahezu beliebig je nach Kundenwunsch applizierbar. Beispielsweise kann der Korrekturwert einem Wert entsprechen, der einer Positionsänderung von 1 mm der Fensterscheibe 2 entspricht. Insbesondere kann der Korrekturwert auf einen Wert zwischen 0,5 und 2 mm festgelegt werden. Der Schwellenwert für den Aufwachzähler kann 2 entsprechen, so dass unmittelbar nach einem Schlafmodus nach einer Kalibrierung der Stellungsangabe kein Beaufschlagen mit einem Korrekturwert erfolgt.

Durch das Beaufschlagen der Stellungsangabe mit dem Korrekturwert kann zuverlässiger verhindert werden, dass es durch eine Verdrehung des Elektromotors 4 bzw. durch ein Bewegen der Fensterscheibe 2 während eines Schlafmodus zu einer Fehljustierung zwischen der Fensterscheibe 2 und der in der Steuereinheit 7 gespeicherten Stellungsangabe kommt. Eine solche Fehljustierung könnte nämlich dazu führen, dass die Einklemmschutzfunktion bereits bei einer Position der Fensterscheibe 2 deaktiviert wird, bei der es möglich ist, dass ein Gegenstand oder ein Körperteil noch zwischen die Fensterscheibe 2 und den Fensterrahmen 5 gelangen kann. Um dies zu vermeiden, ist vorgesehen, dass vorsorglich nach jedem Schlafmodus, der auf einen Schließvorgang folgt, ein Korrekturwert appliziert wird, der den Bereich, in dem Einklemmschutzfunktion deaktiviert ist, kurz vor dem Erreichen der Anschlagskante in der Schließposition verkleinert.

Wird diese Korrektur der Stellungsangabe zu häufig durchgeführt, ohne dass es zu einer tatsächlichen Verstellung der Fensterscheibe 2 bzw. des Elektromotors 4 in dem Schlafmodus gekommen ist, so kann dies dazu führen, dass die Fensterscheibe bei einer Schließbewegung gegen die Anschlagskante in der Schließposition bewegt wird, obwohl die Stellungsangabe noch einen vorhandenen Zwischenraum angibt. Dies würde zu einer Fehlreversierung führen, bei der die Fensterscheibe 2 um einen bestimmten Stellweg in Öffnungsrichtung verfahren wird und der Automatiklaufmodus deaktiviert wird. Gleichzeitig wird dem Benutzer die Möglichkeit gegeben, durch erneutes Betätigen des Bedienelements 8 zum Schließen der Fensterscheibe 2 die Fensterscheibe 2 manuell in Richtung der Schließposition zu bewegen, wobei die Stellungsangabe der Fensterscheibe 2 bei Anschlag an der Schließposition erneut kalibriert werden kann. Nach einer derartigen Kalibrierung kann der Automatiklaufmodus erneut aktiviert werden.

Die Einklemmschutzfunktion wird in der Regel kurz vor dem Anschlag nahe der Schließposition der Fensterscheibe 2 deaktiviert, um beispielsweise die Fensterscheibe 2 lediglich in eine Dichtung an dem Fensterrahmen 5 hineinzufahren, ohne dass die Fensterscheibe 2 an dem Fensterrahmen 5 anschlägt. Somit kann ein geräuscharmes Schließen der Fensterscheibe 2 realisiert werden und die Belastung des mechanischen Systems der Schließmechanik erheblich reduziert werden. Da sich beim Hineinfahren in die Dichtung der Widerstand gegen die Bewegung der Fensterscheibe 2 in der Regel erhöht, ist es notwendig, für diesen Fall die Einklemmschutzfunktion zu deaktivieren. Dies erfolgt in der Regel bereits bei einem bestimmten Abstand zwischen der Dichtung und der Fensterscheibe 2, d.h. vor dem Erreichen der Dichtung. Der Abstand kann beispielsweise 4mm betragen.

## Patentansprüche

1. Verfahren zum Betreiben einer Schließvorrichtung, wobei ein Schließelement (2) mit Hilfe eines durch eine Steuereinheit (7) gesteuerten Antriebsmotor (4) gegen eine Anschlagskante in einer Schließrichtung verfahrbar ist, wobei die Steuereinheit (7) in einen Normalbetriebsmodus, in dem eine Stellungsangabe als aktuelle Position des Schließelements (2) erfasst wird, und in einen Schlafmodus, in dem keine Erfassung der Stellungsangabe durchgeführt wird, versetzbar ist, mit folgenden Schritten:
- Abfragen, ob eine Aufwachbedingung vorliegt, bei der die Steuereinheit (7) von dem Schlafmodus in den Normalbetriebsmodus übergeht;
**gekennzeichnet durch** den weiteren Schritt:
- wenn das Vorliegen der Aufwachbedingung festgestellt wird und nur wenn sich das Schließelement (2) vor dem Einnehmen des Schlafmodus zuletzt in der Schließrichtung bewegt hat, Beaufschlagen (S25) der Stellungsangabe mit einem vorgegebenen Korrekturwert, um die Stellungsangabe bezüglich einer tatsächlichen Position des Schließelements (2) in eine Öffnungsrichtung zu korrigieren, wobei eine Einklemmschutzfunktion, die eine automatische Abschaltung des Antriebsmotors bewirkt, wenn ein Einklemmfall detektiert wird, deaktiviert wird, wenn die Stellungsangabe angibt, dass der Abstand zwischen einer der Anschlagskante gegenüberliegende Kante des Schließelement (2) und der Anschlagskante weniger als einem vorgegebenen Abstand entspricht.

2. Verfahren nach Anspruch 1, wobei die Stellungsangabe nur dann mit dem vorgegebenen Korrekturwert korrigiert wird, wenn nach einem Kalibrieren, bei dem die Stellungsangabe auf die tatsächliche Position des Schließelements (2) kalibriert wird, eine Anzahl von Aufwachvorgängen aus dem Schlafmodus erfolgt ist, die einen vorgegebenen Schwellenwert übersteigt.

3. Verfahren nach Anspruch 2, wobei das Kalibrieren durchgeführt wird, wenn festgestellt wird, dass bei einer Schließbewegung das Schließelement (2) gegen die Anschlagskante verfahren wird.

4. Verfahren nach einem der Ansprüche 1 bis 3, wobei die Aufwachbedingung ein Betätigen eines Bedienelements (8) zum Schließen und/oder Öffnen umfasst.

5. Schließvorrichtung, insbesondere ein automatisches Fensterhebersystem, mit einem Schließelement (2), das mit Hilfe eines durch eine Steuereinheit (7) der Schließvorrichtung gesteuerten Antriebsmotors (4) der Schließvorrichtung gegen eine Anschlagskante in einer Schließrichtung verfahrbar ist, zur Ausführung eines Verfahrens nach einem der Ansprüche 1 - 4.

6. Computerprogrammprodukt, umfassend einen Programmcode, der in einer Datenverarbeitungsvorrichtung der Steuereinheit (7) ausgeführt wird, und bewirkt, dass die Vorrichtung nach Anspruch 5 die Verfahrensschritte nach einem der Ansprüche 1 bis 4 ausführt.

## Claims

1. Method for operating a closing device, wherein a closing element (2) can be moved against a stop edge in a closing direction using a drive motor (4) which is controlled by a control unit (7), wherein the control unit (7) can be placed in a normal operating mode, in which position information is acquired as a current position of the closing element (2), and in a sleep mode, in which the position information is not acquired, having the following steps:
- interrogating whether a wakeup condition is present, in the case of which condition the control unit (7) changes from the sleep mode into the normal operating mode;
**characterized by** the further step:
- if the presence of the wakeup condition is detected and only if the closing element (2) has last moved in the closing direction before the assumption of the sleep mode, applying (S25) a predefined correction value to the position information in order to correct the position information in an opening direction with respect to an actual position of the closing element (2), wherein an anti-trapping function which brings about automatic deactivation of the drive motor if a case of trapping is detected is deactivated if the position information specifies that the distance between an edge of the closing element (2) opposite the stop edge and the stop edge corresponds to less than a predefined distance.

2. Method according to Claim 1, wherein the position information is corrected with the predefined correction value only if, after calibration during which the position information is calibrated to the actual position of the closing element (2), there have been a number of wakeup processes from the sleep mode which exceeds a predefined threshold value.

3. Method according to Claim 2, wherein the calibration is carried out if it is detected that during a closing movement the closing element (2) is moved against the stop edge.

4. Method according to one of Claims 1 to 3, wherein the wakeup condition comprises activating an operator control element (8) to close and/or open.

5. Closing device, in particular an automatic window lifting system, having a closing element (2) which can be moved against a stop edge in a closing direction using a drive motor (4) of the closing device, said drive motor (4) being controlled by a control unit (7) of the closing device, in order to carry out a method according to one of Claims 1-4.

6. Computer program product comprising a program code which is executed in a data processing device of the control unit (7) and causes the device according to Claim 5 to execute the method steps according to one of Claims 1 to 4.

## Revendications

1. Procédé permettant de faire fonctionner un dispositif de fermeture, dans lequel un élément de fermeture (2) peut être déplacé dans une direction de fermeture, à l'aide d'un moteur d'entraînement (4) commandé par une unité de commande (7), contre une arête de butée, dans lequel l'unité de commande (7) peut être amenée dans un mode de fonctionnement normal, dans lequel une donnée de position est détectée en tant que position réelle de l'élément de fermeture (2), et dans un mode veille, dans lequel aucune détection de donnée de position n'est effectuée et qui comprend les étapes consistant à :
- demander s'il existe une condition de sortie de veille, selon laquelle l'unité de commande (7) passe du mode de veille au mode de fonctionnement normal ;
**caractérisé par** l'étape supplémentaire consistant à :
- si l'existence de la condition de sortie de veille est établie et seulement si l'élément de fermeture (2) s'est déplacé en dernier lieu dans la direction de fermeture avant le passage en mode de veille, appliquer (S25) une valeur de correction prédéterminée à la donnée de position, afin de corriger la donnée de position par rapport à une position effective de l'élément de fermeture (2) dans une direction d'ouverture, dans lequel une fonction de prévention de pincement, qui provoque l'arrêt automatique du moteur d'entraînement lorsqu'un pincement est détecté, est désactivée lorsque la donnée de position indique que la distance entre une arête de l'élément de fermeture (2), qui est opposée à l'arête de butée, et l'arête de butée est inférieure à une distance prédéterminée.

2. Procédé selon la revendication 1, dans lequel la donnée de position n'est corrigée avec la valeur de correction prédéterminée que si, après un étalonnage lors duquel la donnée de position est étalonnée sur la position effective de l'élément de fermeture (2), on effectue un nombre de sorties du mode de veille qui est supérieur à une valeur de seuil prédéterminée.

3. Procédé selon la revendication 2, dans lequel l'étalonnage est effectué lorsqu'il est déterminé que lors d'un mouvement de fermeture, l'élément de fermeture (2) est déplacé contre l'arête de butée.

4. Procédé selon l'une des revendications 1 à 3, dans lequel la condition de sortie de veille comprend un actionnement d'un élément de commande (8) pour fermer et/ou ouvrir.

5. Dispositif de fermeture, en particulier système de lève-vitre automatique, comprenant un élément de fermeture (2) qui peut être déplacé dans une direction de fermeture, à l'aide d'un moteur d'entraînement (4) du dispositif de fermeture, contre une arête de butée, qui est commandé par une unité de commande (7) du dispositif de fermeture, pour mettre en oeuvre un procédé selon l'une des revendications 1 à 4.

6. Produit de programme informatique comprenant un code de programme exécuté dans un dispositif de traitement de données de l'unité de commande (7) et amenant le dispositif selon la revendication 5 à mettre en oeuvre les étapes du procédé selon l'une des revendications 1 à 4.
